Europäisches Patentamt

**European Patent Office**

Office européen des brevets

(11) Veröffentlichungsnummer: **0 186 923**
**B1**

(12) **EUROPÄISCHE PATENTSCHRIFT**

(45) Veröffentlichungstag der Patentschrift:
31.01.90

(21) Anmeldenummer: 85201984.3

(22) Anmeldetag: 27.11.85

(51) Int. Cl.⁴: **H 01 G 9/05**

(54) **Trockener Elektrolytkondensator.**

(30) Priorität: 24.12.84 NL 8403928

(43) Veröffentlichungstag der Anmeldung:
09.07.86 Patentblatt 86/28

(45) Bekanntmachung des Hinweises auf die Patenterteilung:
31.01.90 Patentblatt 90/5

(84) Benannte Vertragsstaaten:
BE DE FR GB SE

(56) Entgegenhaltungen:
DE-B- 1 202 904
FR-A- 2 494 891
GB-A- 2 032 691
US-A- 3 667 002
US-A- 3 819 340

(73) Patentinhaber: N.V. Philips' Gloeilampenfabrieken,
Groenewoudseweg 1, NL-5621 BA Eindhoven (NL)

(72) Erfinder: Brommer, Gerrit, p/a INT. OCTROOIBUREAU
B.V. Prof. Holstlaan 6, NL-5656 AA Eindhoven (NL)
Erfinder: van Herwijnen, Arend, p/a INT.
OCTROOIBUREAU B.V. Prof. Holstlaan 6, NL-5656 AA
Eindhoven (NL)
Erfinder: Talma, Cornelis Johannes, p/a INT.
OCTROOIBUREAU B.V. Prof. Holstlaan 6, NL-5656 AA
Eindhoven (NL)
Erfinder: Veenstra, Herbert Ernst Victor, p/a INT.
OCTROOIBUREAU B.V. Prof. Holstlaan 6, NL-5656 AA
Eindhoven (NL)

(74) Vertreter: Pennings, Johannes et al, Internationaal
Octrooibureau B.V. Prof. Holstlaan 6, NL-5656 AA
Eindhoven (NL)

ACTORUM AG

## Beschreibung

Die Erfindung bezieht sich auf einen trockenen Elektrolytkondensator mit einem aus einer Aluminiumplatte gestanzten, gebeizten und gefalteten durch elektrolytische Oxydation mit einer dielektrischen Oxydschicht versehenen Anodenkörper, der mit einer Schicht aus einem halbleitenden Oxyd auf der dielektrischen Oxydschicht bedeckt ist, sowie mit einer leitenden Schicht und mit Anschlussdrähten, die an einer an dem Anodenkörper befindlichen mit einer Umleitung versehenen Anodenzunge bzw. an der äusseren leitenden Schicht ausgebildet sind.

Aus der US-Patentschrift 3 819 340 ist ein Verfahren zum Herstellen derartiger Kondensatoren bekannt, wobei nach diesem Verfahren Anodenelemente dadurch erhalten werden, dass aus einer Aluminiumplatte senkrecht zu der Längsrichtung eines Trägerstreifens stehende Streifen zusammenhängender Platten gestanzt werden. Diese Streifen sind über eine Anschlusszunge mit dem Trägerstreifen verbunden. Die Platten ein und desselben Streifens werden zur Vergrösserung der wirksamen Oberfläche elektrochemisch gebeizt und danach zu einem Paket zusammengefalten. Die auf diese Weise erhaltenen Pakete, die durch den Trägerstreifen miteinander verbunden sind, werden durch elektrolytische Oxydation mit einer dielektrischen Oxydschicht versehen und danach dadurch, dass sie einige Male in eine Mangannitratlösung getaucht und danach auf eine Temperatur erhitzt werden, bei der Pyrolyse des Mangannitrats auftritt, mit einer halbleitenden Mangandioxydschicht versehen. Nach jedem dieser Zyklen wird das Paket nachformiert. Nachdem eine Graphitschicht und danach eine Silberschicht auf der halbleitenden Schicht angebracht ist, werden die Pakete von dem Trägerstreifen getrennt. Jedes Element wird mit einem Anodendraht versehen, der mit dem herausragenden Teil der Anschlusszunge verschweisst wird, sowie mit einem Kathodendraht, der auf der Silberschicht festgelötet wird. Zum Schluss werden die Elemente im Tauchverfahren mit einer Lackschicht versehen.

Vor der Bildung des Aluminiumstreifens wird auf der Anschlusszunge ein aus der Ebene des Trägerstreifens herausragenden Damm 19 gebildet. Derjenige Teil 23 der Anschlusszunge, der für den späteren Anschluss des Anodendrahtes bestimmt ist, soll nämlich blank bleiben. Der Damm vermeidet, dass beim Tauchen in die Mangannitratlösung diese Lösung hoch kriecht und nach der Pyrolysebearbeitung die Anschlusszunge mit halbleitendem Oxyd bedeckt wird. Dieser Damm vermeidet ebenfalls, dass Kathodenmaterial beim Tauchen des Anodenpaketes hoch kriecht. Diese Verunreinigung der Oberfläche der Anschlusszunge könnte Kurzschluss verursachen, und ausserdem kann das Erhalten einer guten Schweissverbindung mit dem Anodendraht beeinträchtigt werden.

Der herausragende Damm wird vorzugsweise während oder nach der Stanzbearbeitung jedoch vor der Formierung auf der Anschlusszunge gebildet, so dass der Damm in einem scharfen Knick aus der Ebene des Trägerstreifens herausragt. Die dem Streifen zusammenhängender Platten zugewandte Ebene des Knicks steht senkrecht auf den Platten.

Ein Nachteil dieser Ausführungsform ist, dass von der endgültig erhaltenen Höhe des Anodenkörpers ein grosser Teil unnützlich ist zum Erhalten des Kapazitätswertes des Kondensators. Bei den zur Zeit üblichen miniatorisierten Ausführungsformen, bei denen man danach bestrebt ist, eine möglichst grosse Kapazität je Volumen zu erhalten, ist diese Ausführungsform nicht sehr interessant.

Bei einer Materialstärke von 0.5 mm wird die Höhe der Dämme etwa 2 mm, d.h. etwa die vierfache Dicke, betragen. Dabei soll der Durchmesser der Schweisselektrode, d.h. 2 bis 4 mm, mit der die Schweissung des Anodenzuführungsdrahtes zu der Zunge verwirklicht werden muss, berücksichtigt werden.

Ausserdem liegen bei dieser Ausführungsform die Stelle, wo die Anodenzunge aus dem Trägerstreifen herausgeschnitten wird und die Stelle, wo die Schweissung auf dem Stiel angebracht wird, fluchtend zueinander und zwar in Richtung des Anschlussdrahtes, der mit der Anodenzunge verschweisst wird. Dies bedeutet, dass die Schneidebearbeitung aufwendig ist, entweder vor dem Schweissen, wobei der Anodenkörper an einer anderen Stelle festgehalten werden muss, oder nach dem Schweissen dadurch, dass um die Schweissung hinweggeschnitten werden muss. Zwar könnte der Anodenanschlussdraht senkrecht auf der Anodenzunge festgeschweisst werden aber in diesem Fall geht Raum verloren, weil danach der Anodenanschlussdraht bis in eine Richtung parallel zu der des Anodenstiels zurückgebogen werden muss.

Die Erfindung hat nun zur Aufgabe, einen Kondensator mit einem Anodenkörper zu schaffen, der keine überflüssigen Raum verbrauchende Höhe aufweist. Weiterhin hat die Erfindung zur Aufgabe, dass bei der Herstellung des Kondensators die Bearbeitungen Schneiden und Schweissen einander nicht stören.

Dazu weist der Kondenstor eine Anodenzunge auf, die eine Umleitung oder Verzweigung aufweist, die eine Öffnung bzw. Ausnehmung zwischen der betreffenden Umleitung bzw. Verzweigung und der Oberseite des Anodenkörpers mit einer Höhe von mindestens 0,8 mm bildet.

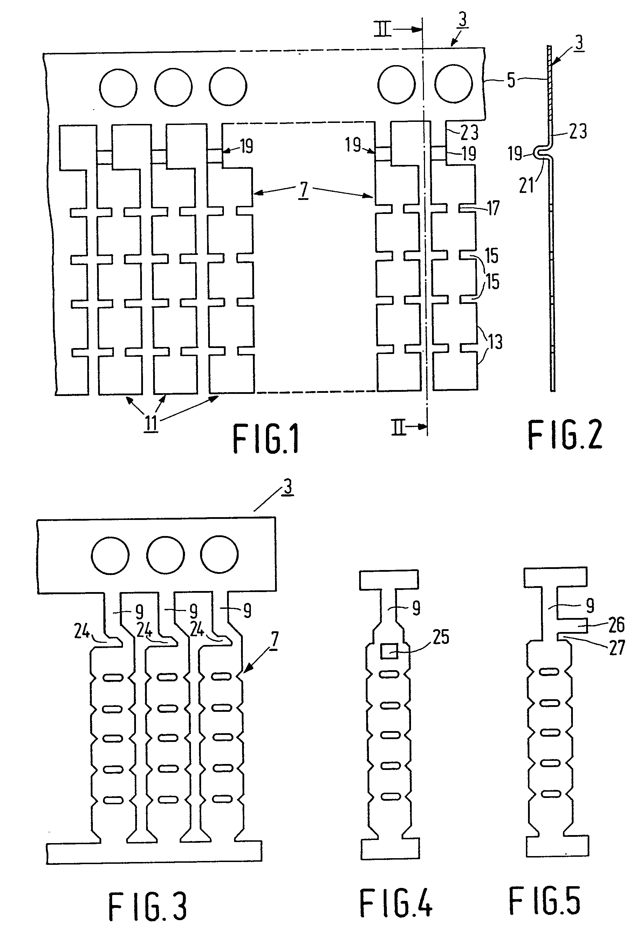

Dies kann verschiedenartig durchgeführt werden, wie in den Figuren 3 bis 7 dargestellt ist.

Mit den gebildeten Öffnungen bzw. Ausnehmungen wird beabsichtigt, dass die Tauchflüssigkeit dadurch festgehalten wird und dass vermieden wird, dass diese längs der Anodenzunge hochkriecht und auf diese Weise diese Zunge nach der Pyrolyse unnötig verunreinigt.

Die im Rahmen der Erfindung durchgeführten Versuche haben gezeigt, dass eine Höhe von mindestens 0.8 mm erforderlich ist um dies zu erreichen. Bei einer geringeren Höhe wird nicht mehr vermieden, dass die Flüssigkeit über das Loch bzw. über die Ausnehmung hinweggeht, wodurch die genannte Verunreinigung auftritt.

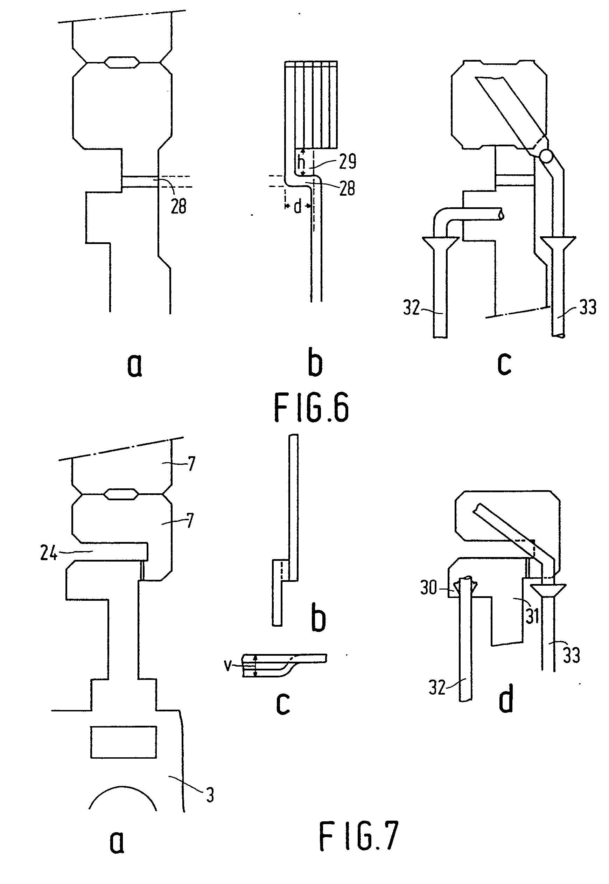

Bei der Erfindung, bei der gegebenenfalls zusammen mit einer Umleitung bzw. Verzweigung in der ursprünglichen Ebene der Anodenzunge eine Umleitung aus dieser Ebene vorhanden ist, wird die Möglichkeit geboten, diese Umleitung derart zu bemessen, dass die Schweissstelle für den Anodendraht in der Mittellinie des Anodenpakets liegt (siehe Fig. 6b). Dies macht das Endprodukt in ästhetischer Hinsicht interessanter.

In den beiliegenden Zeichnungen zeigen die Figuren 1 und 2 die Ausführungsformen nach der U.S. Patentschrift 3 819 340 in Form eines Zwischenerzeugnisses des Verfahrens. In Fig. 1 ist der Trägerstreifen 5 mit einer Anzahl Streifen 7 dargestellt, die in einem späteren Verfahrensschritt zu Paketen längs der Linien 15–17 gefaltet werden. Fig. 2 ist eine Seitenansicht gemäss der Linie II in Fig. 1. Darin ist der Damm 19 sichtbar.

Fig. 3 ist eine erste Ausführungsform, bei der der Anodenanschluss 9 eine derartige Form hat, dass eine Ausnehmung 24 gebildet wird; nach Fig. 4 ist die Anschlusszunge 9 in Richtung der Anodenplatten derart verzweigt, dass eine Öffnung 25 mit einer Seite von 2 mm eingeschlossen wird. In Fig. 5 hat die Anschlusszunge 9 eine seitliche Verzweigung 26, wodurch eine Ausnehmung 27 mit einer Höhe von 1 mm gebildet wird.

Nach einer weiteren Ausführungsform des erfindungsgemässen Kondensators hat die Anschlusszunge eine auswärts gerichtete Abwinklung aus der ursprünglichen Ebene, gegebenenfalls zusammen mit einer Abwinklung in die Ebene der Anodenzunge. Dies vergrössert die Umleitung noch weiter und ausserdem bietet dies den Vorteil, dass auf diese Weise die Anschlusszunge in die Mitte des Produktpakets gebracht werden kann, so dass die Anschlussdrähte gegenüber dem Kondensatorkörper symmetrisch liegen.

In Fig. 6a ist eine Ausführungsform in Vorderansicht und in Fig. 6b in Seitenansicht dargestellt, wobei entsprechend diesen Ansichten die Anschlusszunge einen Knick 28 senkrecht zu der Längsrichtung mit einer Tiefe d = 1,3 mm aufweist, wodurch eine Ausnehmung 29 mit einer Höhe h = 1,2 mm mit dem Anodenpaket gebildet wird. Fig. 6c zeigt die gefalteten Pakete nach dem Anbringen des halbleitenden Oxyds und der leitenden Schicht mit angeschweisstem Anodenzuführungsdraht 32 und angeschweissten Kathodenzufuhr 33.

Es ist in Fig. 7a in Vorderansicht, 7b in Seitenansicht und 7c in Draufsicht eine andere Ausführungsform dargestellt, wobei die Anodenzunge in der Längsrichtung abgewinkelt ist. Die Ausnehmung 24 ist 1,2 mm hoch, die Abwinklung v hat die dreifache Plattenstärke, d.h. 1,5 mm. Fig. 7d zeigt die Befestigung der Anschlussdrähte 32 und 33.

Bei all diesen Ausführungsformen ragt die Mangannitratflüssigkeit beim Eintauchen kaum über die Ausnehmung bzw. die Öffnung heraus, so dass nach Pyrolyse eine völlig reine Anodenanschlusszunge erhalten wird. Auch nach dem Eintauchen in die Graphitsuspension und die Silbersuspension bleibt die Zunge rein.

Eine Umleitung mit seitlicher Abzweigung, wie nach Fig. 3, 5 und 7 ermöglicht es, die Stelle für die Schweissverbindung mit der Anodenzunge (beispielsweise die Stelle 30 in Fig. 7) von der Stelle, wo die Anodenzunge aus dem Trägerstreifen herausgeschnitten wird (beispielsweise die Stelle 31 in Fig. 7) zu trennen.

Ausgehend von ausgestanztem Material (3), das aus einem Trägerstreifen (5) und Streifen (7) besteht, wie dies in Fig. 2–7 dargestellt ist, werden trockene Elektrolytkondensatoren nach dem in der US Patentschrift 3 819 340 beschriebenen Arbeitsvorgang hergestellt. Im Vergleich zu den nach dieser Patentschrift erhaltenen mit Lack versehenen Kondensatoren ausgehend von einem in Fig. 1 dargestellten Trägerstreifen mit Streifen, wobei ein Damm in der Anodenanschlusszunge gefaltet ist, ist die Höhe um 1,5 bis 2 mm verringert bei Abmessungen der Paketelemente von 4x6 mm bei der Ausführungsform jeder der angegebenen Möglichkeiten nach der vorliegenden Erfindung.

## Patentansprüche

1. Trockener Elektrolytkondensator mit einem aus einer Aluminiumplatte gestanzten, gebeizten und gefalteten durch elektrolytische Oxydation mit einer dielektrischen Oxydschicht versehenen Anodenkörper, der mit einer Schicht aus einem halbleitenden Oxyd auf der dielektrischen Oxydschicht bedeckt ist, sowie mit einer leitenden Schicht und mit Anschlussdrähten, die an einer an dem Anodenkörper befindlichen mit einer Umleitung versehenen Anodenzunge bzw. an der äusseren leitenden Schicht ausgebildet sind, dadurch gekennzeichnet, dass die Anodenzunge eine Umleitung oder Verzweigung aufweist, die eine Öffnung bzw. Ausnehmung zwischen der betreffenden Umleitung bzw. Verzweigung und der Oberseite des Anodenkörpers mit einer Höhe von mindestens 0,8 mm bildet.

2. Kondensator nach Anspruch 1, dadurch gekennzeichnet, dass die Umleitung aus der Ebene der Anodenzunge derart bemessen ist, dass die Schweissstelle für den Anodendraht in der Mittellinie des Anodenkörpers liegt.

3. Kondensator nach Anspruch 1 oder 2, dadurch gekennzeichnet, dass mehrere Umleitungen oder Verzweigungen zur Bildung mehrerer Öffnungen bzw. Ausnehmungen vorgesehen sind.

## Claims

1. A solid electrolytic capacitor having an anode body which is punched from an aluminium sheet, etched and folded, and provided with a dielectric oxide layer by electrolytic oxidation, which dielectric oxide layer is covered with a semiconducting oxide layer, on which a conducting layer is provided, and also having leads which are formed at an anode tag on the anode body, said anode tag having a diversion, or at the outer conducting layer, characterized in that the anode tag has a diversion or branch which forms an aperture or recess between the relevant diversion or branch and the upper side of the anode body with a height of at least 0.8 mm.

2. A capacitor as claimed in Claim 1, characterized in that the diversion out of the plane of the anode tag is proportioned so that the welded joint of the anode lead is in the centre line of the anode body.

3. A capacitor as claimed in Claim 1 or 2, characterized in that several diversions or branches for forming several apertures or recesses are provided.

**Revendication**

1. Condensateur électrolytique sec comportant un corps anodique muni d'une couche d'oxyde diélectrique par oxydation électrolytique et réalisé à partir d'une plaque d'aluminium par estampage, décapage et pliage, corps anodique dont la couche d'oxyde diélectrique est recouverte d'une couche en un oxyde semiconducteur, ainsi que d'une couche conductrice et qui est munit de fils de connexion qui sont formés par une languette anodique se trouvant au corps anodique et munie d'une dérivation, respectivement à la couche conductrice extrême, caractérisé en ce que la languette anodique est munie d'une dérivation ou d'une branche formant une ouverture respectivement un évidement entre la dérivation respectivement branchement en question et la face supérieure du corps anodique d'une hauteur d'au moins 0,8 mm.

2. Condensateur selon la revendication 1, caractérisé en ce que la dérivation par rapport au plan de la languette anodique est dimensionnée de façon que l'endroit de soudage pour le fil anodique se situe dans l'axe géométrique du corps anodique.

3. Condensateur selon la revendication 1 ou 2, caractérisé en ce que d'autres dérivations ou branchements pour la formation d'autres ouvertures respectivement évidements sont prévus.

FIG.1

FIG.2

FIG.3

FIG.4

FIG.5

a          b          c

**FIG.6**

a          b

c

**FIG.7**